# EUROPEAN PATENT APPLICATION

(11) **EP 2 345 989 A1**
(43) Date of publication of application: **20.07.2011**
(21) Application number: 11150850.3
(22) Date of filing: 13.01.2011
(51) Int. Cl.: G06Q 40/00

(54) **The method for automatic and partially automatic processing of financial agreements, in particular credit and insurance agreements, the system facilitating automatic and partially automatic processing of financial agreements, and the kiosk for automatic processing of financial agreements**

(30) Priority: 14.01.2010 PL 39019110; 14.01.2010 PL 39019210
(71) Applicant: Stankiewicz, Grzegorz, 03-144 Warszawa (PL); Waclawik, Andrzej, 11-042 Giedajty (PL)
(72) Inventor: Stankiewicz, Grzegorz, 03-144 Warszawa (PL); Waclawik, Andrzej, 11-042 Giedajty (PL)
(74) Representative: Psiorz, Grzegorz

(57) **Abstract**

The invention consists in the method for automatic and partially automatic processing of financial agreements, in particular credit and insurance agreements, the system facilitating automatic and partially automatic processing of financial agreements, and the kiosk for automatic processing of financial agreements.

The method for automatic or partially automatic processing of financial agreements, consisting in selection of a specific type of financial service, in particular credit and/or insurance agreement, entry of required data, signing and printing relevant validation documents, characterized by automatic transfer of information from scanned and decoded documents directly into the agreement. The method is characterized by identification of the customer applying for credit or insurance by means of electronic signature or comparison of previously documented biometric data with the data scanned by the device or with an image captured by a camera. The system facilitating automatic or partially automatic processing of financial agreements, in particular credit and insurance agreements online, which comprises a central unit connected to at least one credit institution and/or at least one insurance institution or one insurance agent or/and credit agent, an input and an output devices, is characterized by inclusion of at least one scanning device connected to a system that decodes information recorded in required items and/or codes of scanned documents, after which decoded information are recorded directly in credit application submitted by a provided link to the credit institution for the purpose of verification or recorded directly in insurance application or/and insurance policy, while scanned and recorded data are also recorded in the agreement.

## Description

The invention consists in the method for automatic and partially automatic processing of financial agreements, in particular credit and insurance agreements, the system facilitating automatic and partially automatic processing of financial agreements, and the kiosk for automatic processing of financial agreements.

The purpose of the invention is to provide a fully automated or mostly automated process by means of which customers would be able to obtain cash loans, mortgage loans, consolidated loans, auto loans, instalment loans or credit cards, as well as to enter into property insurance agreements, life insurance agreements and other insurance agreements, in particular motor vehicle insurance agreements or agreements providing coverage within the area of tourism, real estate insurance or real protection. The abovementioned purpose may be fulfilled by means of kiosk that facilitate automatic processing of insurance agreements and loan agreements. Depending on their basic functions, such specially designed and adequately equipped kiosks, connected with online servers of credit or insurance institutions or their agencies, will provide an innovative, cost-effective and user-friendly channel for distribution of banking and/or insurance services. Such kiosks will enable optimal automation of all stages of the credit extension process, i.e. from selection of the most favourable offer and processing of credit application up to printing the actual loan agreement. Similarly for insurance agreements, a specially designed kiosk will facilitate automatic generation of insurance agreements up to the stage of printing the actual insurance policy. An additional purpose of the invention is to create an innovative service that enables fast and freely accessible processing of insurance agreements, just as withdrawing cash from a cash dispenser.

Similar systems are now being launched all over the world and are subject to numerous patent applications. For example, patent specification US 2009319393 filed in the United States features a solution based on the computer system that processes in-store sales and, at the same time, is utilized as a bank terminal for processing renewable lines of credit for in-store purchases.

Another American patent specification, US 6105007, features a method and a apparatus that complete the automated cycle of typical financial operations including such operations as issuance of lines of credit, verification, savings and individual retirement accounts, check delivery, placing orders for additional checks, issuing credit or debit cards, and electronic financial transfers. All transactions are initiated from a kiosk and controlled by customer interface software. In case of credit applications, the interface software assists the customer in completing and signing the credit application and transferring funds. The interface software obtains all the information required for application processing, on the basis of which the credit application is approved or declined, which then results in an electronic transfer of funds into customer's deposit account and in arrangement of automatic credit payments. The interface software enables the customer to view required documents including the payment arrangement proposal and other required documents that help the customer get acquainted with the terms and conditions of the credit agreement, as well as collects customer's signature submitted on an electronic touch pad. Copies of documents along with their digital images are printed for customer's convenience by the kiosk. The kiosk can also print credit or debit cards upon customer's request.

American patent specification US5537315 features an insurance agreement processing station with a touch screen and a keyboard enabling entry of required information and signing of the insurance agreement.

On the other hand, Korean patent specification WO2009/051365 features a mandatory motor vehicle insurance agreement processing system. The system enables automatic processing of insurance agreements, as well as collection of insurance premiums on the basis of information entered by the customer. The system calculates premiums and then, upon confirmation of the payment through an integrated online banking system, issues a confirmation of the insurance agreement.

Patent specifications are generally focused on automation of banking procedures, including decision-making procedures, at the stage of verification of customer's application and electronic signature.

The essential part of the invention is the method for automatic or partially automatic processing of financial agreements, in particular credit and insurance agreements, consisting in selection of a specific type of financial services, entry of required data, signing and printing relevant validation documents, which is characterized by automatic transfer of required data directly from scanned and decoded documents, where the customer is identified by means of electronic signature or by comparison of previously documented biometric data with the data scanned by the kiosk. Furthermore, the customer may select the best offer in a given category among all offers suggested by the system.

Another essential part of the invention is the system facilitating automatic or partially automatic processing of financial agreements, in particular credit and insurance agreements online, which comprises a central unit connected to at least one credit and/or insurance institution, and an input and an output devices, which may be characterized by inclusion of at least one scanning device connected to a decoding system aligned with the required fields and codes of scanned documents, as well as by recording decoded information directly in the credit application submitted by a link to the credit institution for the purpose of verification or in the insurance application and insurance policy. Scanned and decoded data are also recorded in finalized agreements. It should be also emphasized that the kiosk consists of a casing with a monitor, which is conveniently equipped with a touch screen and an optional touch pad, by means of which the customer can attach signature to the electronic application, a central unit, a printer used for printing financial agreements and other required documents, a connection module enabling communication by locally available channels with credit and/or insurance institutions, as well as a keyboard, scanners and readers, of which at least one scanning device is connected to a system that decodes information encrypted in document codes and other similar devices that enable fast and error-free transfer to the electronic credit or insurance application data with customer's identity documents, as well as enable storing other customer's documents. Optionally the kiosk may include monitoring system or a system that facilitates identification of the customer by comparing biometric data recorded in documents containing data collected by such systems as chip readers, cameras, fingerprint scanners, iris scanners/readers or Finger Vein scanners and cash dispenser modules, which enable immediate issuance of a payment in accordance with the credit agreement.

The invented method and system are presented in examples below.

In the partially automatic mode, a part of operations may be performed by means of individual components of the system with the help of a trained person. Automatic processing of agreements requires application of a kiosk configured as specified in the invention. The kiosk comprises a casing with a monitor equipped with a touch screen and a touchpad, by means of which the customer can attach signature to electronic application, a central unit, a printer used for printing credit agreements and other required documents, a connection module enabling communication over a phone line with credit institutions, as well as scanners and readers for 1Dand 2D bar codes and electronic chips. Automatic processing of credit applications will be similar to the standard procedure that the customer must complete at a bank or at another location where standard applications can be processed.

The customer selects on the touch screen the desired type of credit he or she wishes to apply for and then inserts an identification document into the reader for scanning by means of an OCR reader, a code reader or a chip reader. The customer's data are decoded and imported into the corresponding items in the electronic credit application and then to the actual credit agreement. Once banks complete all required information, such as information about the source and amount of income, requested amount of credit, anticipated duration of credit payments, the template of the signature submitted by means of the touch screen or the touch pad, the credit application is submitted to bank's credit system for the purpose of verification and approval. Upon successful verification by at least one of the banks, the customer must accept the financial terms and conditions of the credit by means of the touch screen. If the application is approved by more than one bank, the customer may select the best offer. Optionally, customer's decision may be supported by results provided by a browser kiosk. Then the customer selects the mode and the form of withdrawal of the funds, for example one-time cash withdrawal from the approved cash credit line at the counter of an establishment partnering with the automated system operator located in the same commercial centre. Optionally, it may be, for example, an increase of the debit card limit, online transfer into an account indicated by the customer, or a one-time cash withdrawal from a cash dispenser. Upon completion of data processing, the banking system may optionally utilize other channels of communication with the customer such as text messaging, e-mails, etc. Then the customer signs the agreement using, for example, the electronic signature option or submitting personal signature on the touch screen or on the touch pad and the kiosk prints all relevant documents confirming completion of the agreement processing and of the operation. The kiosk stores the agreement and all required data and submits them to the server of the credit institution. Optionally, the kiosk may include monitoring systems or systems that enable identification of the customer such as a camera, a fingerprint scanner/reader, iris scanner/reader, Finger Vein scanner or any other biometric data readers or scanners. Selection of the abovementioned devices results exclusively from binding regulations, which provide for their use for customer identification purposes or for decoding of data encrypted in documents required for credit agreements processing.

An analogously configured kiosk may be used for insurance agreement processing purposes. In case of insurance agreement processing, the customer begins the process by selecting and purchasing an insurance policy on the touch screen by pressing the symbol corresponding to the desired insurance product. The customer selects an insurance provider when all available offers are displayed on the screen. Upon selection of the desired type of insurance, for example auto insurance, the customer inserts the vehicle registration card into 1D/2D code reader, the code on the vehicle registration card is scanned and submitted to an online server in order for the encrypted data to be decoded. If a given document has no 1D code, 2D code, no chip or no option to download data by means of RFID technology or other features, the entire vehicle registration card would be scanned. Once decoded, vehicle information and customer's data are submitted to the automatic system and entered into the insurance application, upon which the customer must only provide information not included in the scanned code or document. On the basis of registered data, insurance provider's algorithm determines the amount of the insurance premium. Upon acceptance of the premium amount and the terms and conditions of insurance offered by the insurance provider, the customer selects the form of payment, for example by bank transfer, by credit or debit card, or by cash with the help of the automatic payment terminal. Once payment is approved, the kiosk prints the required documents that constitute the proof of processing of an insurance agreement, by which the operation is completed. The personal information of the customer required also for other insurance agreements may be obtained by scanning customer's identification document. This way customer's information is transferred from scanned documents into the insurance application and the actual insurance policy. The kiosk stores the agreement along with the required data and transfers them to the server operated by the agent and/or the insurance provider. Optionally the kiosk may include a monitoring system and a system that facilitates registration and identification of the customer, such as a camera, scanners/readers of such biometric data as fingerprints, iris or Finger Vein scanner. Selection of the abovementioned devices results exclusively from binding regulations, which provide for or require their use for customer identification purposes or for decoding of data encrypted in documents required for credit agreements processing.

Both credit and insurance application processing machines may be located in establishments such as banks, credit agencies, commercial centres, hypermarkets, selected chain retailer networks, telecommunication services providers' outlets, petrol stations, post offices, newsagents', train or bus stations and airports, as well as other similar facilities.

The advantages of application of the system include: increased accessibility of credit offer (the customer is no longer required to make a special trip to the bank, as all required formalities may be completed remotely from regularly frequented locations); reduced duration of processing (the customer does no longer have to spend time waiting in line, as scanners and chip and code readers save the time required for entry of information into credit applications). The systems presented in technical specifications require the customer to enter all data manually without any mistakes. Other advantages of the system include elimination of third parties' participation, as a result of which the customer will feel comfortable entering personal information into the bank system, which may be perceived by the customer as sensitive, while banks and other credit institutions may reduce their expenses by lowering employment-related costs. Another advantage is the possibility to file multiple credit applications with several banks at the same time and then select only one offer for approval of customer's application within the shortest period of time and on the best terms and conditions. The machine also reduces the period of waiting until the actual funds are made available. Thanks to application of personal document scanners, cameras or readers of such data as fingerprints, banks gain additional security mechanisms that prevent potential credit fraud attempts, while the customer gains a quicker access to funds, instead of such operations as bank transfers into customer's account. In case of cash credits, the machine enables nearly immediate cash payment from the cash register partnering with the bank of the commercial establishment located in the same commercial centre or from the same machine, if the machine is equipped with a cash dispenser. The situation is analogous in case of an insurance machine. The advantages of the system is the accessibility of the insurance offer (the customer is no longer required to make a special trip to insurance provider's or insurance agent's office, as all required formalities may be completed remotely from regularly frequented locations); reduced duration of processing (the customer does no longer have to spend time waiting in line, as scanners and chip and code readers save the time required for entry of information into insurance applications and insurance policies). Another advantage, from the perspective of insurance providers and insurance agents, is facilitation and acceleration of processing, reduction of shift management costs, as well as reduction of personnel maintenance costs. Furthermore, with the help of readers and scanners, data are entered without errors. It is also possible to compare offers of several insurance providers at the same time and to select only one insurance offer with the best terms and conditions.

## Claims

1. The method for automatic or partially automatic processing of financial agreements, consisting in selection of a specific type of financial service, in particular credit and/or insurance agreement, entry of required data, signing and printing relevant validation documents, **characterized by** automatic transfer of information from scanned and decoded documents directly into the agreement.

2. In accordance with claim 1, the method is **characterized by** identification of the customer applying for credit or insurance by means of electronic signature or comparison of previously documented biometric data with the data scanned by the device or with an image captured by a camera.

3. In accordance with claim 1, the method is **characterized by** free selection by the customer of the credit institution from among offers submitted by several financial institutions suggested by the machine.

4. In accordance with claim 1, the method is **characterized by** free selection by the customer of the best offer among offers suggested by the machine.

5. The system facilitating automatic or partially automatic processing of financial agreements, in particular credit and insurance agreements online, which comprises a central unit connected to at least one credit institution and/or at least one insurance institution or one insurance agent or/and credit agent, an input and an output devices, is **characterized by** inclusion of at least one scanning device connected to a system that decodes information recorded in required items and/or codes of scanned documents, after which decoded information are recorded directly in credit application submitted by a provided link to the credit institution for the purpose of verification or recorded directly in insurance application or/and insurance policy, while scanned and recorded data are also recorded in the agreement.

6. The kiosk for automatic processing of financial agreements, in particular credit and insurance agreements, in accordance with claim 1 is **characterized by** inclusion of a casing with a monitor, which is conveniently equipped with a touch screen and an optional touch pad, by means of which the customer can attach signature to electronic application, a central unit, a printer used for printing credit agreements and other required documents, a connection module enabling communication by locally available channels with credit institutions, as well as a camera, scanners and/or code and electronic chip readers recorded in identification documents and other similar devices, which enable fast and error-free transfer of data into electronic credit applications from customer's identification documents, as well as archivization of other customer's documents.

7. In accordance with claim 6, the kiosk is **characterized by** inclusion of monitoring systems, systems that facilitate identification of the customer by comparing biometric data included in documents, as well as in chips inserted in documents, with data obtained from biometric identification systems.

8. In accordance with claim 6, the kiosk is **characterized by** inclusion of a cash dispensing module that enables immediate withdrawal of funds in accordance with credit agreement.

9. In accordance with claim 6, the kiosk is **characterized by** inclusion of a payment accepting module that enables immediate payment of the premium in accordance with insurance agreement.
